# EUROPÄISCHE PATENTSCHRIFT

(11) **EP 3 892 896 B1**
(45) Veröffentlichungstag und Bekanntmachung des Hinweises auf die Patenterteilung: **28.05.2025**
(21) Anmeldenummer: 21167244.9
(22) Anmeldetag: 07.04.2021
(51) Int. Cl.: F16K 3/02, F16K 3/30

(54) **ABSPERRSCHIEBER, GESTÄNGE FÜR EINEN ABSPERRSCHIEBER UND VERFAHREN ZUM ENTLÜFTEN EINES ABSPERRSCHIEBERS**
GATE VALVE, ROD ASSEMBLY FOR A GATE VALVE AND METHOD FOR VENTING A GATE VALVE
VANNE D'ARRÊT, TIGE POUR VANNE D'ARRÊT ET PROCÉDÉ DE PURGE D'UNE VANNE D'ARRÊT

(30) Priorität: 08.04.2020 DE 102020109920
(43) Veröffentlichungstag der Anmeldung: 13.10.2021
(73) Patentinhaber: Westnetz GmbH, 44139 Dortmund (DE)
(72) Erfinder: Niebialek, Sascha, 45894 Gelsenkirchen (DE)
(74) Vertreter: Bals & Vogel Patentanwälte PartGmbB

(56) Entgegenhaltungen:
- EP-A1- 3 511 600
- CN-B- 106 641 421
- DE-C- 529 170
- DE-U- 1 936 301
- US-A- 2 116 626
- US-A- 3 134 401

## Beschreibung

Die vorliegende Erfindung betrifft einen Absperrschieber für eine Fluidleitung, aufweisend eine Fluidleitung, einen Sperrkörper, ein Betätigungsmittel zum Bewegen des Sperrkörpers in eine Freigabeposition zum Ermöglichen eines Fluidstroms durch die Fluidleitung und eine Sperrposition zum Verhindern eines Fluidstroms durch die Fluidleitung, und ein benachbart zur Fluidleitung ausgestaltetes Gehäuse mit einem Gehäusevolumen, wobei das Betätigungsmittel ein Gestänge aufweist, das sich wenigstens teilweise durch das Gehäusevolumen erstreckt. Die Erfindung betrifft ferner ein Gestänge für einen Absperrschieber sowie ein Verfahren zum Entlüften eines Absperrschiebers.

Gattungsgemäße Absperrschieber werden in der Regel zum vollständigen Öffnen und Schließen des gesamten Durchflussquerschnitts eines (Gas-)Rohres genutzt. Im Gegensatz zu Ventilen werden Absperrschieber insbesondere nicht zur Regulierung der Durchflussmenge, sondern nur zum vollständigen Unterbinden oder Freigeben eines Fluidstroms verwendet.

Nach dem Einbau eines Absperrschiebers in ein (Gas-)Rohrsystem ist es erforderlich, dass alle Rohrleitungen und Rohrformteile einschließlich Absperrschieber einer Druckprüfung unterzogen werden. In Abhängigkeit des Prüfdrucks wird diese Prüfung mit dem Prüfmedium Wasser durchgeführt. Nach Beendigung der Druckprüfung kann im sogenannten Schieber-Dom noch ein durch das Prüfmedium, beispielsweise ein Gemisch aus Wasser und Schieberöl bzw. Sperrkörperöl, verursachter Restdruck herrschen. Wird der Restdruck nicht entspannt, kann es vorkommen, dass sich der Sperrkörper des Absperrschiebers nicht mehr oder nur noch mit hohem Kraftaufwand betätigen bzw. bewegen lässt.

Um eine spätere Funktionsbeeinträchtigung zu vermeiden, wird nach der Druckprüfung für gewöhnlich eine Entspannungs- und Befüllöffnung am Schieber-Dom geöffnet. Hierzu wird bei bekannten Systemen eine Entlüftungsschraube gelöst, um eine Durchgangsöffnung in den Schieber-Dom freizugeben. Die Entlüftungsschraube befindet sich in der Regel unter passivem Korrosionsschutz. Zum Lösen der Entlüftungsschraube muss die Schutzhülle im Bereich der Verschlussschraube zerstört werden. Nach der Druckentlastung ist die Verschlussschraube wieder passiv gegen Korrosion zu schützen. Dazu muss der Absperrschieber zumindest im Bereich der Verschlussschraube nachumhüllt werden. Dieser Vorgang ist mit einem zusätzlichen finanziellen Aufwand verbunden. Darüber hinaus ist aus technischer Sicht eine Nachumhüllung im Vergleich zur Werksumhüllung nachteilig.

Die Druckschrift EP 3 511 600 A1 zeigt einen Absperrschieber zum Absperren einer Öffnung in einem Fluidkanal. Die Druckschrift US 2 116 626 A offenbart ein Druckbegrenzungs- und Ablassventil für eine Fluidrohrleitung. In der Druckschrift US 3 134 401 A wird ein Prüfventil für ein Fluidsystem beschrieben und die Druckschrift DE 529 170 C zeigt eine Entlüftungsvorrichtung für einen Absperrschieber.

Keine dieser Druckschriften zeigt einen Absperrschieber mit einem benachbart zum Fluidleitabschnitt ausgestalteten Gehäuse mit einem Gehäusevolumen, welches durch einen geschlossenen Gehäusebehälter gebildet ist, der zum Zwecke einer kontinuierlichen Schmierung und/oder zur Konservierung der gleitenden Teile des Absperrschiebers mit Schmierstoff befüllbar ist.

Aufgabe der vorliegenden Erfindung ist es, der voranstehend beschriebenen Problematik zumindest teilweise Rechnung zu tragen. Insbesondere ist es Aufgabe der vorliegenden Erfindung, einen Absperrschieber mit verbesserter Entlüftung zu schaffen, wobei vorzugsweise eine vorhandene Umhüllung erhalten bleibt.

Die voranstehende Aufgabe wird durch die unabhängigen Patentansprüche gelöst. Insbesondere wird die voranstehende Aufgabe durch den Absperrschieber gemäß Anspruch 1, das Gestänge gemäß Anspruch 12 sowie das Verfahren gemäß Anspruch 13 gelöst. Weitere Vorteile der Erfindung ergeben sich aus den Unteransprüchen, der Beschreibung und den Zeichnungen. Dabei gelten Merkmale und Details, die im Zusammenhang mit dem Absperrschieber beschrieben sind, selbstverständlich auch im Zusammenhang mit dem erfindungsgemäßen Gestänge für den Absperrschieber, das erfindungsgemäße Verfahren und jeweils umgekehrt, sodass bezüglich der Offenbarung zu den einzelnen Erfindungsaspekten stets wechselseitig Bezug genommen wird oder werden kann.

Gemäß einem ersten Aspekt der vorliegenden Erfindung wird ein Absperrschieber für eine Fluidleitung zur Verfügung gestellt. Der Absperrschieber weist einen Fluidleitabschnitt, einen Sperrkörper, ein Betätigungsmittel zum Bewegen des Sperrkörpers in eine Freigabeposition zum Ermöglichen eines Fluidstroms durch den Fluidleitabschnitt und eine Sperrposition zum Verhindern eines Fluidstroms durch den Fluidleitabschnitt, und ein benachbart zum Fluidleitabschnitt ausgestaltetes Gehäuse mit einem Gehäusevolumen auf. Unter dem Begriff "benachbart" soll dabei verstanden werden, dass der Fluidleitabschnitt (für den Fluidstrom) in der unmittelbaren Nähe, aber fluidtechnisch getrennt (bzw. separat), vom Gehäuse mit dem Gehäusevolumen ausgestaltet ist. Somit kann der Fluidstrom nicht in das Gehäusevolumen eindringen. Das Gehäuse weist einen in sich geschlossenen Gehäusebehälter auf, wodurch das Gehäusevolumen gebildet ist. Das Betätigungsmittel weist ein Gestänge auf, das sich wenigstens teilweise durch das Gehäusevolumen erstreckt. In dem Gestänge ist ein Entlüftungskanal mit einem Lufteinlass im und/oder am Gehäusevolumen und einem Luftauslass zum Auslassen von Luft aus dem Gehäusevolumen in die Umgebung des Absperrschiebers ausgestaltet.

Im Rahmen der vorliegenden Erfindung wurde sich vom bekannten Konzept einer spezifischen Entlüftungsöffnung im Gehäusemantel abgewandt. Zur Verbesserung des bekannten Konzepts wurde der erfindungsgemäße Entlüftungskanal durch das Gestänge entwickelt. Dieses Konzept bietet den Vorteil, dass ein Korrosionsmantel des Absperrschiebers und/oder des Gehäuses für einen Belüftungsvorgang lokal nicht entfernt und/oder beschädigt werden muss, wie dies bei den bislang bekannten Systemen der Fall war. Das Gestänge ragt bei gattungsgemäßen Absperrschiebern über den Korrosionsmantel hinaus, wodurch dieser während des Belüftungsvorgangs mit einem erfindungsgemäßen Absperrschieber nicht beschädigt werden muss. Vielmehr kann für den Belüftungsvorgang lediglich der Entlüftungskanal im Gestänge vorübergehend geöffnet und wieder fluiddicht verschlossen werden.

Der Entlüftungskanal kann in Form einer Hohllochbohrung gefertigt sein. Der Entlüftungskanal erstreckt sich bevorzugt abschnittsweise konzentrisch zum Gestänge oder zumindest konzentrisch zu dem Gestängeabschnitt, in welchem der Entlüftungskanal ausgestaltet ist. Zum Lufteinlass und/oder Luftauslass hin kann sich der Entlüftungskanal in Radialrichtung oder schräg zur Radialrichtung zu einer Außenumfangsfläche des Gestänges hin erstrecken. Der Entlüftungskanal kann folglich mit Blick auf einen seitlichen Querschnitt des Absperrschiebers L-förmig oder im Wesentlichen L-förmig ausgestaltet sein. Der Entlüftungskanal kann demnach wenigstens zwei schräg oder rechtwinklig zueinander verlaufende Entlüftungskanalabschnitte aufweisen.

Der Absperrschieber ist insbesondere in Form eines Absperrschiebers für eine Gasleitung, bevorzugt zum vollständigen Verschließen sowie zum vollständigen Freigeben der Gasleitung, ausgestaltet. Darunter, dass sich das Gestänge wenigstens teilweise durch das Gehäusevolumen erstreckt kann verstanden werden, dass sich wenigstens ein Teil des Gestänges durch das Gehäusevolumen erstreckt und/oder das sich der wenigstens eine Teil des Gestänges durch wenigstens einen Teil des Gehäusevolumens erstreckt. Bevorzugt erstreckt sich der wenigstens eine Teil des Gestänges über die gesamte Höhe des Gehäusevolumens durch das Gehäusevolumen. Der Teil des Gestänges, der sich durch das Gehäusevolumen erstreckt, weist vorzugsweise eine drehbar im Gehäuse positionierte Spindel auf, mittels welcher sich der Sperrkörper zwischen der Freigabeposition und der Sperrposition bewegen lässt. Das Gestänge kann die Spindel sowie einen Krafteinleitabschnitt in einem Endbereich des Gestänges außerhalb des Gehäuses, zum Einleiten einer Verstellkraft zum Verstellen des Sperrkörpers in das Gestänge, aufweisen. Das Gestänge ist vorzugsweise zerstörungsfrei drehbar, insbesondere zum Verstellen des Sperrkörpers zwischen der Freigabeposition und der Sperrposition, im Gehäuse und/oder im Absperrschieber positioniert.

Das Gehäuse bzw. das Gehäusevolumen, welches durch einen geschlossenen Gehäusebehälter gebildet ist, ist zum Zwecke einer kontinuierlichen Schmierung und/oder zur Konservierung der gleitenden Teile des Absperrschiebers wie dem Sperrkörper und dem Gestänge teilweise mit Schmierstoff, insbesondere Öl, gefüllt. Dadurch kann eine dauerhafte und leichtgängige Bedienung des Absperrschiebers bei fast unverändertem Drehmoment, insbesondere über den gesamten Produktlebenszyklus des (wartungsfreien) Absperrschiebers, gewährleistet werden. Das Gehäuse kann als sogenannter Schieber-Dom oder zumindest als Bestandteil des Schieber-Doms verstanden werden. Das Gehäuse weist einen in sich geschlossenen Gehäusebehälter auf, wodurch das Gehäusevolumen gebildet ist. Dieser Gehäusebehälter (mit seinem Gehäusevolumen) ist vorteilhafterweise fluidtechnisch vom Fluidleitabschnitt (durch den der Fluidstrom geleitet wird) getrennt (bzw. separiert), um eine Verunreinigung und/oder Verschmutzung des Schmierstoffes im Gehäusebehälter zu vermeiden.

Darunter, dass der Lufteinlass im und/oder am Gehäusevolumen ausgestaltet ist kann verstanden werden, dass sich der Lufteinlass und/oder der Entlüftungskanal nur bis zu einem Randbereich des Gehäusevolumens sowie einem Randbereich des Gestänges, oder über das Gestänge hinaus in das Gehäusevolumen hinein, erstrecken kann. Am Luftauslass ist bevorzugt ein Verschlussmittel zum luftdichten Verschließen und Öffnen des Luftauslasses ausgestaltet oder zumindest positionierbar.

Gemäß einer weiteren Ausführungsform der vorliegenden Erfindung ist es möglich, dass bei einem Absperrschieber das Gestänge außerhalb des Gehäuses einen Gestängekopf aufweist, wobei der Luftauslass im Gestängekopf ausgestaltet ist. Der Gestängekopf ragt über einen etwaigen Korrosionsmantel des Gehäuses hinaus, wodurch ein Öffnen und Schließen des Entlüftungskanals für einen Entlüftungsvorgang keine Auswirkungen auf den Korrosionsmantel hat. Dadurch können Zeit und entsprechende Kosten gespart werden. Darüber hinaus kann verhindert werden, dass die Qualität des Korrosionsschutzes durch eine nachgearbeitete Korrosionsschicht leidet. Der Luftauslass kann in einer Vertiefung im Gestängekopf und/oder in Form der Vertiefung im Gestängekopf ausgestaltet sein, wodurch ein Verschlussmittel zum luftdichten Verschließen des Luftauslasses nicht über den Gestängekopf hinausragen würde. Dadurch ist der Gestängekopf kompakt ausgestaltet und eine unbeabsichtigte Beschädigung von hervorstehenden Teilen kann verhindert werden.

Ferner ist es möglich, dass bei einem Absperrschieber gemäß der vorliegenden Erfindung der Luftauslass konzentrisch zum Gestängekopf ausgestaltet ist. Eine solche Lösung ist besonders einfach realisierbar. Neben dem Luftauslass kann zumindest ein Teilabschnitt des Entlüftungskanals über eine Länge zum Luftauslass hin konzentrisch zum Gestängekopf ausgestaltet sein. Dadurch kann eine gleichmäßige Kräfteverteilung durch die ausströmende Luft während eines Entlüftungsvorgangs erreicht werden.

Weiterhin kann es von Vorteil sein, wenn sich bei einem Absperrschieber gemäß der vorliegenden Erfindung der Entlüftungskanal zum Luftauslass hin zumindest abschnittsweise parallel oder schräg zum Fluidleitabschnitt erstreckt. Damit kann verhindert werden, dass sich Dreck im Bereich des Luftauslasses ansammelt und während eines Entlüftungsvorganges in das Gehäuse bzw. das Gehäusevolumen gelangen kann. Dies ist insbesondere bei einer Verwendung des Absperrschiebers im Erdreich von Vorteil. Der Entlüftungskanal kann sich zum Luftauslass hin insbesondere schräg mit einer Öffnungsrichtung des Luftauslasses in Richtung zum Fluidleitabschnitt hin erstrecken.

Darüber hinaus ist es bei einem erfindungsgemäßen Absperrschieber möglich, dass der Entlüftungskanal im Bereich des Lufteinlasses ein Gefälle in Richtung des Fluidleitabschnitts aufweist. Dadurch können etwaige Öl und/oder Schmutzrückstände selbstständig aus dem Entlüftungskanal in das Gehäuse bzw. das Gehäusevolumen herauslaufen und/oder herausfallen. Folglich können Rückstände im Entlüftungskanal verhindert und ein reibungsloser Entlüftungsvorgang gewährleistet werden. Der Winkel des Gefälles beträgt weniger als 90° mit Bezug auf die Flussrichtung im Fluidleitabschnitt und/oder mit Bezug auf die Längs- bzw. Axialrichtung des Fluidleitabschnitts.

Gemäß einer weiteren Ausgestaltungsvariante der vorliegenden Erfindung ist es möglich, dass bei einem Absperrschieber im und/oder am Luftauslass ein Gewinde für eine Schraubverbindung mit einem Schraubmittel ausgestaltet ist. Dies bildet eine einfache und kostengünstige Anbindungsmöglichkeit für ein Veschlussmittel zum luftdichten Verschließen sowie zum zerstörungsfreien Freigeben des Entlüftungskanals. Darunter, dass das Gewinde am Luftauslass ausgestaltet ist kann verstanden werden, dass das Gewinde zumindest in unmittelbarer Nähe des Luftauslasses ausgestaltet ist. Das Gewinde kann beispielsweise in einer Vertiefung im Gestänge bzw. in einem Gestängekopf ausgestaltet sein, sodass ein in das Gewinde geschraubtes Schraubmittel nicht über den Gestängekopf hinausragt. In diesem Fall kann die Vertiefung als Luftauslass verstanden werden, an welchem das Gewinde ausgestaltet ist. Das Gewinde kann gemäß der vorliegenden Erfindung in Form eines Innengewindes oder eines Außengewindes ausgestaltet sein. Das Innengewinde kann besonders platzsparend und für ein entsprechend kleines Schraubmittel zur Verfügung gestellt werden. Das Außengewinde ermöglicht einen Verschluss, der den Entlüftungskanal vorteilhaft vor Verschmutzung schützen kann.

Der erfindungsgemäße Absperrschieber kann entsprechend ein für das Gewinde passendes Schraubmittel zum Einschrauben in das Gewinde oder zum Aufschrauben auf das Gewinde zum fluidtechnischen Abdichten des Entlüftungskanals aufweisen. Das Schraubmittel kann gemäß einer weiteren Ausführungsform der vorliegenden Erfindung ein Dichtelement zum fluidtechnischen Abdichten des Entlüftungskanals aufweisen. Durch die Integration des Dichtelements in das Schraubmittel kann eine einfache und trotzdem zuverlässige Luftdichtung für den Entlüftungskanal geschaffen werden. Das Dichtelement kann beispielsweise in Form eines O-Rings im Bereich eines Schraubenkopfs des Schraubmittels bereitgestellt sein. Das Schraubmittel ist vorzugsweise als Zylinderkopf-, Tellerkopf-, Trompetenkopf-, oder Madenschraube ausgestaltet. Durch eine Tellerkopfschraube oder eine Zylinderkopfschraube kann bei einfacher Geometrie des Luftauslasses eine zuverlässige Dichtwirkung erzielt werden. Eine Madenschraube kann besonders platzsparend und zudem einfach in ein bereits bestehendes System integriert werden, da keine oder im Wesentlichen keine Änderungen an der Geometrie des Gestängekopfes vorgenommen werden müssen.

Ein erfindungsgemäßer Absperrschieber kann ferner einen Korrosionsschutzmantel aufweisen, der die Außenfläche des Absperrschiebers vollständig oder zumindest einen überwiegenden Teil der Außenfläche des Absperrschiebers bedeckt. D.h., der Absperrschieber kann vollständig oder zumindest überwiegend, also auf beispielsweise mehr als 90% der Außenfläche des Absperrschiebers, durch den Korrosionsschutzmantel bedeckt und/oder mit diesem beschichtet sein. Dies ist insbesondere dann von Vorteil, wenn der Absperrschieber im Erdreich und/oder einer feuchten Umgebung verwendet wird. Durch die erfindungsgemäße Ausgestaltung des Entlüftungskanals durch das Gestänge über das Gehäuse hinaus kann der Korrosionsschutzmantel grundsätzlich bedenkenlos über die gesamte Oberfläche des Gehäuses aufgetragen werden. Der Korrosionsschutzmantel weist zumindest überwiegend, insbesondere vollständig oder im Wesentlichen vollständig, (technisches) Polyurethan auf.

Gemäß einem weiteren Aspekt der vorliegenden Erfindung wird ein Gestänge für einen wie vorstehend im Detail beschriebenen Absperrschieber zur Verfügung gestellt. Der Absperrschieber weist entsprechend einen Entlüftungskanal mit einem Lufteinlass und einem Luftauslass zum Auslassen von Luft aus dem Gehäusevolumen in die Umgebung des Absperrschiebers auf. Damit bringt ein erfindungsgemäßes Gestänge die gleichen Vorteile mit sich, wie sie ausführlich mit Bezug auf den erfindungsgemäßen Absperrschieber beschrieben worden sind.

Im Rahmen der vorliegenden Erfindung wird ferner ein Verfahren zum Entlüften eines wie vorstehend beschriebenen Absperrschiebers vorgeschlagen. Das Verfahren weist die folgenden Schritte auf:
- Freigeben des Entlüftungskanals im Gestänge zum Auslassen von Luft aus dem Gehäusevolumen in die Umgebung des Absperrschiebers durch den Luftauslass, und nachfolgend
- Schließen des Entlüftungskanals im Gestänge zum Verhindern eines Luftauslasses aus dem Gehäusevolumen in die Umgebung des Absperrschiebers durch den Luftauslass.

Damit bringt auch ein erfindungsgemäßes Verfahren die vorstehend beschriebenen Vorteile mit sich. Somit kann ein vorhandener Korrosionsschutzmantel bei dem beanspruchten Verfahren unberührt bleiben, so dass der Absperrschieber optimal gegen Korrosion geschützt ist.

Der erfindungsgemäße Absperrschieber kann auch als Gasabsperrschieber bezeichnet werden, da er im Wesentlichen für Gasrohre und Gasleitungen, die insbesondere unterirdisch verlegt sind, konzipiert ist.

Weitere, die Erfindung verbessernde Maßnahmen ergeben sich aus der nachfolgenden Beschreibung zu verschiedenen Ausführungsbeispielen der Erfindung, welche in den Figuren schematisch dargestellt sind. Sämtliche aus den Ansprüchen, der Beschreibung oder den Figuren hervorgehende Merkmale und/oder Vorteile, einschließlich konstruktiver Einzelheiten und räumlicher Anordnungen können sowohl für sich als auch in den verschiedenen Kombinationen erfindungswesentlich sein.

Es zeigen jeweils schematisch:
- Figur 1: einen Absperrschieber gemäß einer ersten Ausführungsform der vorliegenden Erfindung,
- Figur 2: einen Absperrschieber gemäß einer zweiten Ausführungsform der vorliegenden Erfindung,
- Figur 3: ein Schraubmittel an einem Gestängekopf gemäß einer ersten Ausführungsform der vorliegenden Erfindung,
- Figur 4: ein Schraubmittel an einem Gestängekopf gemäß einer zweiten Ausführungsform der vorliegenden Erfindung,
- Figur 5: ein Schraubmittel an einem Gestängekopf gemäß einer dritten Ausführungsform der vorliegenden Erfindung,
- Figur 6: ein Schraubmittel an einem Gestängekopf gemäß einer vierten Ausführungsform der vorliegenden Erfindung,
- Figur 7: ein Flussdiagramm zum Erläutern eines Verfahrens gemäß einer bevorzugten Ausführungsform der vorliegenden Erfindung, und
- Figur 8: einen Absperrschieber gemäß einer im Stand der Technik bekannten Ausführungsform.

Elemente mit gleicher Funktion und Wirkungsweise sind in den Figuren jeweils mit den gleichen Bezugszeichen versehen.

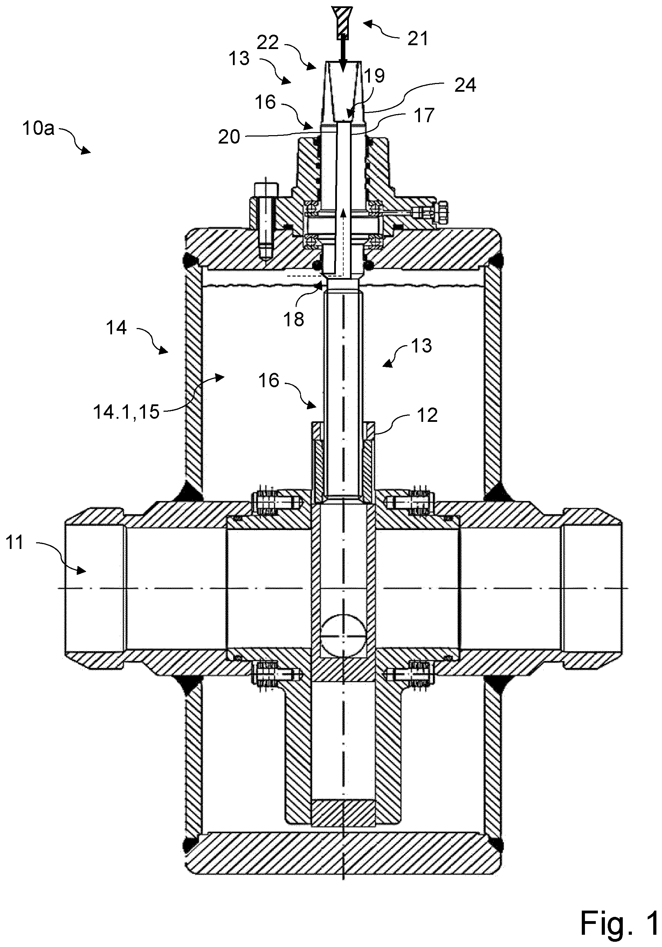

Fig. 1 zeigt einen Absperrschieber 10a für eine Fluidleitung in Form einer Gasleitung gemäß einer ersten Ausführungsform. Der dargestellte Absperrschieber 10a weist einen Fluidleitabschnitt 11, einen Sperrkörper 12 und ein Betätigungsmittel 13 auf. Das Betätigungsmittel 13 ist zum Bewegen des Sperrkörpers 12 in eine Freigabeposition zum Ermöglichen eines Fluidstroms durch den Fluidleitabschnitt 11 und eine Sperrposition zum Verhindern eines Fluidstroms durch den Fluidleitabschnitt 11 konfiguriert. Der Absperrschieber 10a weist ferner ein benachbart zum Fluidleitabschnitt 11 ausgestaltetes Gehäuse 14 mit einem Gehäusevolumen 15 auf. Das Gehäuse 14 weist einen in sich geschlossenen Gehäusebehälter 14.1 auf, wodurch das Gehäusevolumen 15 gebildet ist, um eine Verunreinigung und/oder Verschmutzung des Schmierstoffes im Gehäusebehälter 14.1 zu vermeiden. Um das Betätigungsmittel 13 permanent und langfristig zu schmieren, ist ein Schmierstoff, insbesondere in Form von Öl, im Gehäusebehälter 14.1 vorgesehen, welcher in den Fig. 1, 2 und 8 durch den Schmierstoffpegel angedeutet ist. Das Betätigungsmittel 13 weist ein Gestänge 16 auf, das sich durch das Gehäusevolumen 15 erstreckt. In dem Gestänge 16 ist ein Entlüftungskanal 17 mit einem Lufteinlass 18, der vorzugsweise oberhalb des Schmierstoffpegels (in einer Einbaulage des Absperrschiebers) angeordnet ist, am Gehäusevolumen 15 und einem Luftauslass 19 zum Auslassen von Luft aus dem Gehäusevolumen 15 in die Umgebung des Absperrschiebers 10a ausgestaltet.

Das gezeigte Gestänge 16 weist außerhalb des Gehäuses 14 einen Gestängekopf 22 auf, wobei der Luftauslass 19 im Gestängekopf 22 ausgestaltet ist. Genauer gesagt ist der Luftauslass 10 in einem Rücksprung in Form eines konischen Sacklochs im Gestängekopf 22 ausgestaltet. Der Gestängekopf ist gemäß der gezeigten Ausführungsform als Krafteinleitungsabschnitt mit einer Krafteinleitfläche 24 ausgestaltet, über welche die Verstellkraft zum Verstellen des Sperrkörpers 12 zwischen der Freigabeposition und der Sperrposition in das Gestänge 16 bzw. das Betätigungsmittel 13 eingebracht werden kann.

Der Luftauslass 19 ist konzentrisch zum bzw. im Gestängekopf 22 ausgestaltet. Der dargestellte Absperrschieber 10a weist ferner ein Schraubmittel 21 in Form einer Trompetenkopfschraube zum Einschrauben in ein Gewinde 20 im Entlüftungskanal 17 im Bereich des Luftauslasses 19 auf. Das Gewinde 20 ist in Form eines Innengewindes ausgestaltet. Der in Fig. 1 dargestellte Absperrschieber 10a ist im Wesentlichen vollständig mit einem Korrosionsschutzmantel (nicht im Detail dargestellt) aus Polyurethan beschichtet.

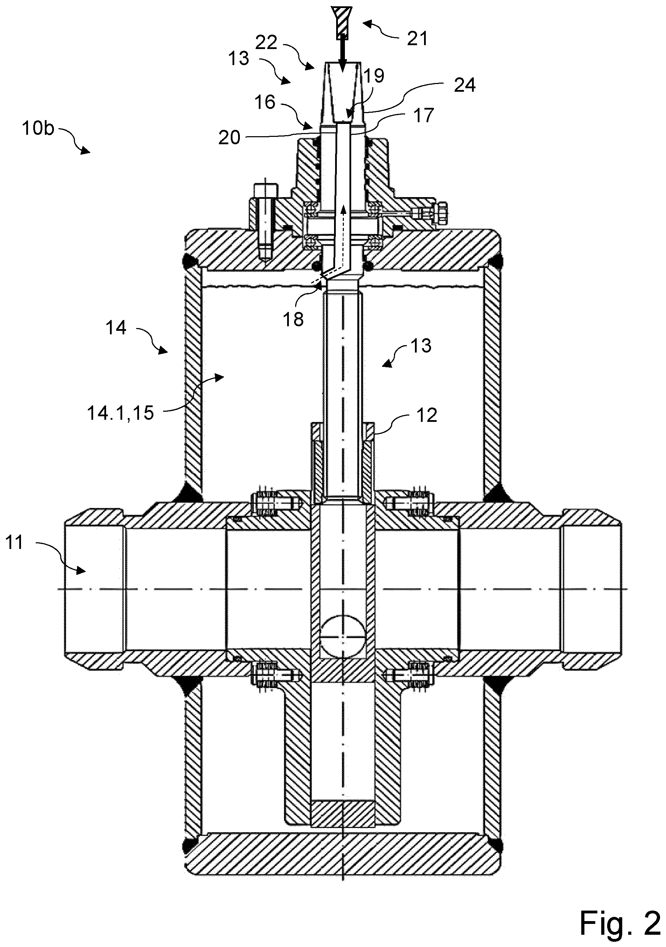

Fig. 2 zeigt einen Absperrschieber 10b gemäß einer zweiten Ausführungsform. Der in Fig. 2 dargestellte Absperrschieber entspricht im Wesentlichen dem in Fig. 1 dargestellten Absperrschieber 10a und unterscheidet sich insbesondere dadurch, dass der Entlüftungskanal 17 im Bereich des Lufteinlasses 18 ein Gefälle in Richtung des Fluidleitabschnitts 11 aufweist.

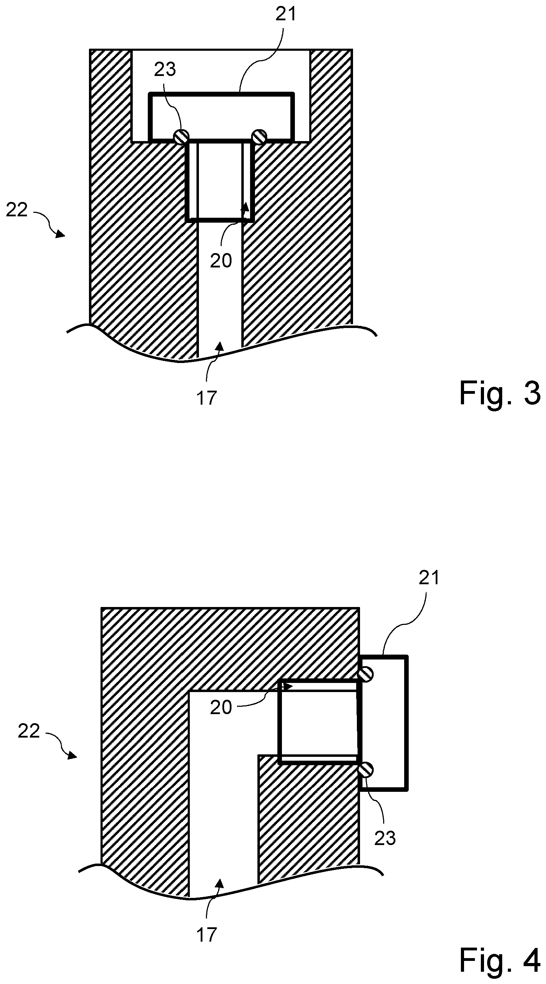

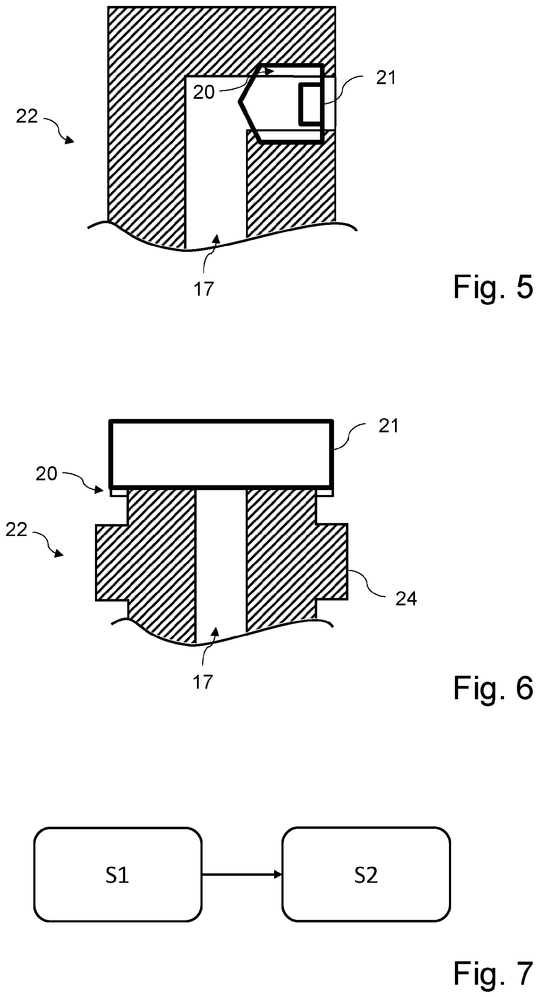

In Fig. 3 ist ein wie vorstehend beschriebenes Schraubmittel 21 im Detail dargestellt. Das Schraubmittel 21 gemäß Fig. 3 ist in Form einer Zylinderkopfschraube bereitgestellt und weist ein Dichtelement 23 in Form eines O-Rings zum fluidtechnischen Abdichten des Entlüftungskanals 17 auf. Bei dem in Fig. 4 gezeigten Ausführungsbeispiel erstreckt sich der Entlüftungskanal 17 über eine Länge zum Luftauslass 19 hin parallel zum Fluidleitabschnitt 11. Das Schraubmittel 21 ist wieder in Form einer Zylinderkopfschraube bereitgestellt. Diesmal ragt der Zylinderkopf allerdings über die Außenfläche des Gestängekopfes 22 hinaus. Fig. 5 zeigt eine Ausführungsform, bei welcher das Schraubmittel 21 in Form einer Madenschraube ausgestaltet ist. Gemäß der in Fig. 6 dargestellten Ausführungsform ist das Schraubmittel 21 in Form eines Schraubdeckels ausgestaltet, der sich über ein Gewinde 20 in Form eines Außengewindes auf den Gestängekopf 22 schrauben lässt. Für eine hindernisfreie Betätigung des Betätigungsmittels 13 bzw. zum Verstellen des Sperrkörpers 12 mittels Steckschlüssel weist der Krafteinleitungsabschnitt, der durch die Krafteinleitungsfläche 24 umfasst ist, einen größeren Durchmesser als das Gewinde 20 auf.

Mit Bezug auf Fig. 7 wird anschließend ein Verfahren zum Entlüften eines wie vorstehend im Detail beschriebenen Absperrschiebers 10a, 10b erläutert. In einem ersten Schritt S1 wird zunächst der Entlüftungskanals 17 im Gestänge 16 zum Auslassen von Luft aus dem Gehäusevolumen 15 in die Umgebung des Absperrschiebers 10a, 10b durch den Luftauslass 19 freigegeben. Hierzu kann einfach das Schraubmittel 21 aus dem Gewinde geschraubt werden. Sobald das Gehäuse 14 ausreichend entlüftet wurde, wird der Entlüftungskanal 17 im Gestänge 16 zum Verhindern eines Luftauslasses aus dem Gehäusevolumen 15 in die Umgebung des Absperrschiebers 10a, 10b wieder geschlossen. Hierzu wird lediglich wieder das Schraubmittel 21 in bzw. auf das Gewinde 20 gedreht.

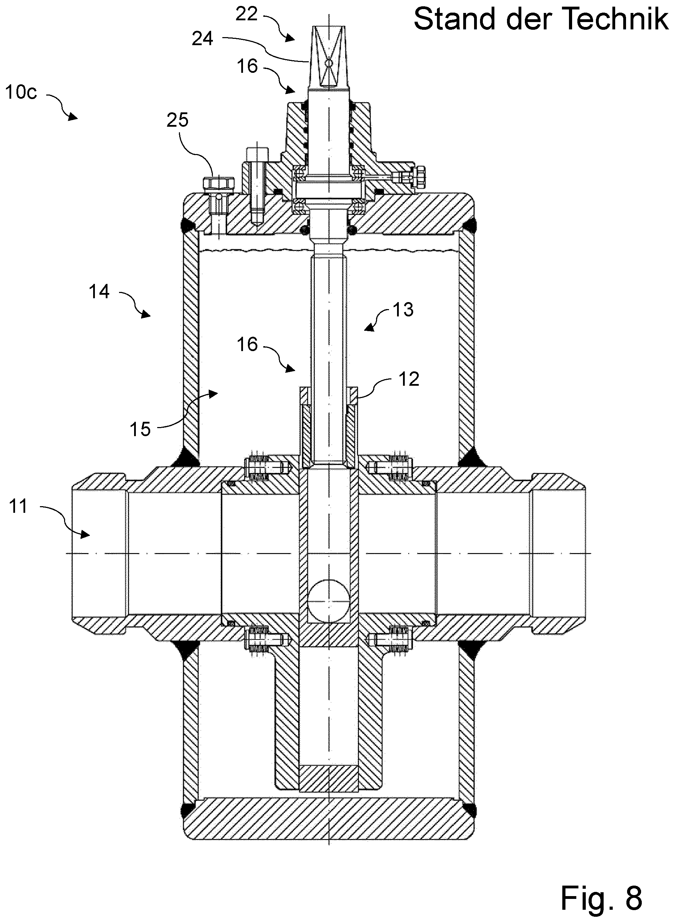

Fig. 8 zeigt einen im Stand der Technik bekannten Absperrschieber 10c, bei welchem die Entlüftung mittels einer Entlüftungsschraube 25 im Gehäuse durchgeführt wird.

Neben den dargestellten Ausführungsformen lässt die Erfindung weitere Gestaltungsgrundsätze zu. D.h., die Erfindung soll nicht auf die mit Bezug auf die Figuren erläuterten Ausführungsbeispiele beschränkt betrachtet werden.

**Bezugszeichenliste**

| | | | |
|---|---|---|---|
| 10a | Absperrschieber | | |
| 10b | Absperrschieber | | |
| 10c | Absperrschieber | | |
| 11 | Fluidleitabschnitt | | |
| 12 | Sperrkörper | | |
| 13 | Betätigungsmittel | | |
| 14 | Gehäuse | | |
| 14.1 | Gehäusebehälter | 15 | Gehäusevolumen |
| 16 | Gestänge | | |
| 17 | Entlüftungskanal | | |
| 18 | Lufteinlass | | |
| 19 | Luftauslass | | |
| 20 | Gewinde | | |
| 21 | Schraubmittel | | |
| 22 | Gestängekopf | | |
| 23 | Dichtelement | | |
| 24 | Krafteinleitfläche | | |
| 25 | Entlüftungsschraube | | |

## Patentansprüche

1. Absperrschieber (10a; 10b) für eine Fluidleitung, aufweisend einen Fluidleitabschnitt (11), einen Sperrkörper (12), ein Betätigungsmittel (13) zum Bewegen des Sperrkörpers (12) in eine Freigabeposition zum Ermöglichen eines Fluidstroms durch den Fluidleitabschnitt (11) und eine Sperrposition zum Verhindern eines Fluidstroms durch den Fluidleitabschnitt (11), und ein benachbart zum Fluidleitabschnitt (11) ausgestaltetes Gehäuse (14) mit einem Gehäusevolumen (15), welches durch einen geschlossenen Gehäusebehälter (14.1) gebildet ist, der zum Zwecke einer kontinuierlichen Schmierung und/oder zur Konservierung der gleitenden Teile des Absperrschiebers mit Schmierstoff befüllbar ist, wobei das Betätigungsmittel (13) ein Gestänge (16) aufweist, das sich wenigstens teilweise durch das Gehäusevolumen (15) erstreckt, wobei in dem Gestänge (16) ein Entlüftungskanal (17) mit einem Lufteinlass (18) im und/oder am Gehäusevolumen (15) und einem Luftauslass (19) zum Auslassen von Luft aus dem Gehäusevolumen (15) in die Umgebung des Absperrschiebers (10a; 10b) ausgestaltet ist.

2. Absperrschieber (10a; 10b) nach Anspruch 1,
**dadurch gekennzeichnet,**
**dass** das Gestänge (16) außerhalb des Gehäuses (14) einen Gestängekopf (22) aufweist, wobei der Luftauslass (19) im Gestängekopf (22) ausgestaltet ist.

3. Absperrschieber (10a; 10b) nach Anspruch 2,
**dadurch gekennzeichnet,**
**dass** der Luftauslass (19) konzentrisch zum Gestängekopf (22) ausgestaltet ist.

4. Absperrschieber (10a; 10b) nach einem der voranstehenden Ansprüche,
**dadurch gekennzeichnet,**
**dass** sich der Entlüftungskanal (17) zum Luftauslass (19) hin zumindest abschnittsweise parallel oder schräg zum Fluidleitabschnitt (11) erstreckt.

5. Absperrschieber (10b) nach einem der voranstehenden Ansprüche,
**dadurch gekennzeichnet,**
**dass** der Entlüftungskanal (17) im Bereich des Lufteinlasses (18) ein Gefälle in Richtung des Fluidleitabschnitts (11) aufweist.

6. Absperrschieber (10a; 10b) nach einem der voranstehenden Ansprüche,
**dadurch gekennzeichnet,**
**dass** im und/oder am Luftauslass (19) ein Gewinde (20) für eine Schraubverbindung mit einem Schraubmittel (21) ausgestaltet ist.

7. Absperrschieber (10a; 10b) nach Anspruch 6,
**dadurch gekennzeichnet,**
**dass** das Gewinde (20) in Form eines Innengewindes oder eines Außengewindes ausgestaltet ist.

8. Absperrschieber (10a; 10b) nach einem der voranstehenden Ansprüche,
**gekennzeichnet durch**
ein Schraubmittel (21) zum Einschrauben in das Gewinde (20) oder zum Aufschrauben auf das Gewinde (20) zum fluidtechnischen Abdichten des Entlüftungskanals (17).

9. Absperrschieber (10a; 10b) nach Anspruch 8,
**dadurch gekennzeichnet,**
**dass** das Schraubmittel (21) ein Dichtelement (23) zum fluidtechnischen Abdichten des Entlüftungskanals aufweist.

10. Absperrschieber (10a; 10b) nach einem der voranstehenden Ansprüche,
**gekennzeichnet durch**
einen Korrosionsschutzmantel, der den Absperrschieber (10a; 10b) vollständig oder im Wesentlichen vollständig bedeckt.

11. Absperrschieber (10a; 10b) nach Anspruch 10,
**gekennzeichnet dadurch, dass**
der Korrosionsschutzmantel zumindest überwiegend Polyurethan aufweist.

12. Verfahren zum Entlüften eines Absperrschiebers (10a; 10b) nach einem der Ansprüche 1 bis 11, aufweisend die Schritte:
- Freigeben des Entlüftungskanals (17) im Gestänge (16) zum Auslassen von Luft aus dem Gehäusevolumen (15) in die Umgebung des Absperrschiebers (10a; 10b) durch den Luftauslass (19), und nachfolgend
- Schließen des Entlüftungskanals (17) im Gestänge (16) zum Verhindern eines Luftauslasses aus dem Gehäusevolumen (15) in die Umgebung des Absperrschiebers (10a; 10b) durch den Luftauslass (19).

## Claims

1. Gate valve (10a; 10b) for a fluid line, comprising a fluid guiding section (11), a blocking body (12), an actuating means (13) for moving the blocking body (12) into a release position for allowing a fluid flow through the fluid guiding section (11) and a blocking position for preventing a fluid flow through the fluid guiding section (11), and a housing (14) designed adjacent to the fluid guiding section (11) and having a housing volume (15) which is formed by a closed housing container (14.1) which can be filled with lubricant for the purpose of continuous lubrication and/or preservation of the sliding parts of the gate valve, the actuating means (13) having a linkage (16) which extends at least partially through the housing volume (15),
wherein a venting channel (17) with an air inlet (18) in and/or on the housing volume (15) and an air outlet (19) for releasing air from the housing volume (15) into the vicinity of the gate valve (10a; 10b) is formed in the linkage (16).

2. Gate valve (10a; 10b) according to claim 1,
**characterized in that**
the linkage (16) has a linkage head (22) outside the housing (14), the air outlet (19) being formed in the linkage head (22).

3. Gate valve (10a; 10b) according to claim 2,
**characterized in that**
the air outlet (19) is concentric to the linkage head (22).

4. Gate valve (10a; 10b) according to one of the preceding claims,
**characterized in that**
the venting channel (17) extends towards the air outlet (19) at least in sections parallel or at an angle to the fluid guide section (11).

5. Gate valve (10b) according to one of the preceding claims,
**characterized in that**
the venting channel (17) has a gradient in the direction of the fluid guide section (11) in the region of the air inlet (18).

6. Gate valve (10a; 10b) according to one of the preceding claims,
**characterized in that**
a thread (20) for a screw connection with a screw means (21) is formed in and/or on the air outlet (19).

7. Gate valve (10a; 10b) according to claim 6,
**characterized in that**
the thread (20) is designed in the form of an internal thread or an external thread.

8. Gate valve (10a; 10b) according to one of the preceding claims,
**characterized in that**
a screwing means (21) for screwing into the thread (20) or for screwing onto the thread (20) for fluidically sealing the venting channel (17).

9. Gate valve (10a; 10b) according to claim 8,
**characterized in that**
**in that** the screw means (21) has a sealing element (23) for fluidically sealing the venting channel.

10. Gate valve (10a; 10b) according to one of the preceding claims,
**characterized in that**
a corrosion protection jacket that completely or substantially completely covers the gate valve (10a; 10b).

11. Gate valve (10a; 10b) according to claim 10,
**characterized in that**
the corrosion protection coating is at least predominantly polyurethane.

12. A method for venting a gate valve (10a; 10b) according to any one of claims 1 to 11, comprising the steps of:
- releasing the venting channel (17) in the linkage (16) for letting air out of the housing volume (15) into the vicinity of the gate valve (10a; 10b) through the air outlet (19), and subsequently
- Closing the venting channel (17) in the linkage (16) to prevent air from escaping from the housing volume (15) into the vicinity of the gate valve (10a; 10b) through the air outlet (19).

## Revendications

1. Vanne d'arrêt (10a ; 10b) pour une conduite de fluide, présentant une section de guidage de fluide (11), un corps de blocage (12), un moyen d'actionnement (13) pour déplacer le corps de blocage (12) dans une position de libération pour permettre un écoulement de fluide à travers la section de guidage de fluide (11) et une position de blocage pour empêcher un écoulement de fluide à travers la section de guidage de fluide (11), et un boîtier (14) conçu au voisinage de la section de guidage de fluide (11) avec un volume de boîtier (15), qui est formé par un récipient de boîtier fermé (14.1), qui peut être rempli de lubrifiant dans le but d'une lubrification continue et/ou de la conservation des pièces coulissantes de la vanne d'arrêt, le moyen d'actionnement (13) présentant une tringlerie (16) qui s'étend au moins partiellement à travers le volume de boîtier (15),
dans lequel un canal d'aération (17) est réalisé dans la tringlerie (16) avec une entrée d'air (18) dans et/ou sur le volume de boîtier (15) et une sortie d'air (19) pour l'évacuation de l'air du volume de boîtier (15) dans l'environnement de la vanne d'arrêt (10a ; 10b).

2. Vanne d'arrêt (10a ; 10b) selon la revendication 1,
**caractérisé en ce que**
la tringlerie (16) présente une tête de tringlerie (22) à l'extérieur du boîtier (14), la sortie d'air (19) étant configurée dans la tête de tringlerie (22).

3. Vanne d'arrêt (10a ; 10b) selon la revendication 2,
**caractérisé en ce que**
la sortie d'air (19) est conçue de manière concentrique par rapport à la tête de tringlerie (22).

4. Vanne d'arrêt (10a ; 10b) selon l'une quelconque des revendications précédentes,
**caractérisé en ce que**
le canal d'aération (17) s'étend vers la sortie d'air (19) au moins par sections parallèlement ou en oblique par rapport à la section de guidage de fluide (11).

5. Vanne d'arrêt (10b) selon l'une quelconque des revendications précédentes,
**caractérisé en ce que**
le canal d'aération (17) présente, dans la zone de l'entrée d'air (18), une pente en direction de la section de guidage de fluide (11).

6. Vanne d'arrêt (10a ; 10b) selon l'une quelconque des revendications précédentes,
**caractérisé en ce qu'**
un filetage (20) est réalisé dans et/ou sur la sortie d'air (19) pour un assemblage vissé avec un moyen de vissage (21).

7. Vanne d'arrêt (10a ; 10b) selon la revendication 6,
**caractérisé en ce que**
**en ce que** le filetage (20) est réalisé sous la forme d'un filetage intérieur ou d'un filetage extérieur.

8. Vanne d'arrêt (10a ; 10b) selon l'une quelconque des revendications précédentes,
**caractérisé en ce qu'**
un moyen de vissage (21) à visser dans le filetage (20) ou à visser sur le filetage (20) pour assurer l'étanchéité fluidique du canal d'aération (17).

9. Vanne d'arrêt (10a ; 10b) selon la revendication 8,
**caractérisé en ce que**
le moyen de vissage (21) présente un élément d'étanchéité (23) pour l'étanchéité fluidique du canal d'aération.

10. Vanne d'arrêt (10a ; 10b) selon l'une quelconque des revendications précédentes,
**caractérisé en ce qu'**
une enveloppe de protection contre la corrosion qui recouvre entièrement ou sensiblement entièrement la vanne d'arrêt (10a ; 10b).

11. Vanne d'arrêt (10a ; 10b) selon la revendication 10,
**caractérisé en ce que**
l'enveloppe de protection contre la corrosion comprend au moins principalement du polyuréthane.

12. Procédé de purge d'un vanne d'arrêt (10a ; 10b) selon l'une quelconque des revendications 1 à 11, comprenant les étapes consistant à :
- libérer le canal d'aération (17) dans la tringlerie (16) pour évacuer l'air du volume du boîtier (15) dans l'environnement de la vanne d'arrêt (10a ; 10b) par la sortie d'air (19), et ensuite
- fermeture du canal d'aération (17) dans la tringlerie (16) pour empêcher une sortie d'air du volume du boîtier (15) dans l'environnement de la vanne d'arrêt (10a ; 10b) par la sortie d'air (19).
